# EUROPÄISCHE PATENTSCHRIFT

(11) **EP 2 787 870 B1**
(45) Veröffentlichungstag und Bekanntmachung des Hinweises auf die Patenterteilung: **23.03.2016**
(21) Anmeldenummer: 12822958.0
(22) Anmeldetag: 22.11.2012
(51) Int. Cl.: A47J 37/07, A47J 37/06

(54) **GRILLGERÄT**
GRILL
GRIL

(30) Priorität: 05.12.2011 DE 102011120756
(43) Veröffentlichungstag der Anmeldung: 15.10.2014
(73) Patentinhaber: Emami, Arman, 10117 Berlin (DE)
(72) Erfinder: Emami, Arman, 10117 Berlin (DE)
(74) Vertreter: Kietzmann, Manfred
(86) Internationale Anmeldenummer: PCT/DE2012/001142
(87) Internationale Veröffentlichungsnummer: WO 2013/083107

(56) Entgegenhaltungen:
- WO-A1-2007/073061
- DE-A1- 3 715 621
- DE-U1-202004 009 520
- US-A- 5 473 980
- US-A- 5 603 256
- US-A1- 2001 037 802
- US-A1- 2003 041 744

## Beschreibung

Die Erfindung betrifft ein in einem Rahmengestell angeordnetes Grill mit elektrischen Heizmitteln und/oder Gasbrennern als Heizmittel, die unterhalb eines Rostes für das Grillgut angeordnet sind, mit einer Abdeckung für die Heizmittel, um zu verhindern das abtropfendes Fett mit der Heizquelle in Kontakt kommt und mit schräg angeordneten Leitblechen für abtropfendes Fett unterhalb der Heizmittel, über die das Fett zu einer Sammelrinne geleitet wird.

Ein solches Grillgerät ist aus der US 5 566 606 A, der US 6 260 478 B1 und der US 2011/0 219 957 A1 bekannt. Die Abdeckungen für die Heizquelle sind hier spitzdachartig bzw. flach mit Abkantungen in Richtung Heizquelle ausgebildet. Die Leitbleche für abtropfendes Fett sind großflächig ausgeführt. Die Roste sind einstückig und abnehmbar abgeordnet.

Diese Grillgeräte weisen wesentliche Nachteile in Bezug auf die Bedienerfreundlichkeit auf, denn die Teile, die mit Fett in Kontakt kommen, sind, wenn sie nicht sogar fest montiert sind, von einer Größe, die die Reinigung in einer herkömmlichen Haushaltsspülmaschine nicht zulässt.

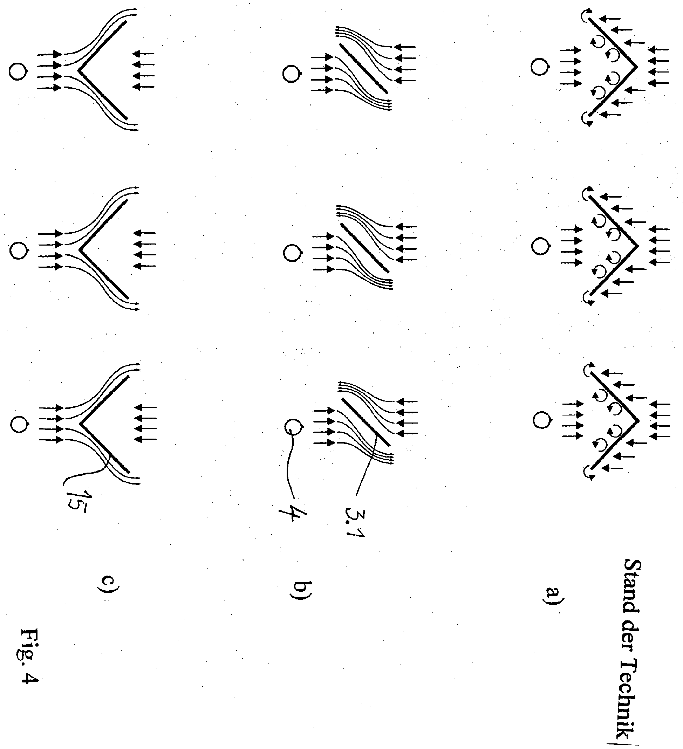

Spitzdachartige Abdeckungen, wie sie auch in Fig. 4 als Stand der Technik gezeigt werden, oder in Richtung Heizquelle abgekantete flache Abdeckungen für die Heizquellen haben zudem den Nachteil, dass es einerseits zu einem Wärmestau unterhalb der Abdeckung kommt, so dass Fett auf der Abdeckung verbrennt, und es andererseits in den Kantenbereichen zu einem Kontakt zwischen dem abtropfenden Fett und der erhitzten Luft, die sich in Richtung Grillgut bewegt, kommt. Auch hier können Fettverbrennungen oder Verpuffungen auftreten.

Soweit Gitterroste als Roste verwendet werden, haben diese neben der fehlenden Spülmaschinentauglichkeit infolge der Größe noch den Nachteil, dass sich an den Gitterkreuzungspunkten Grillgutreste ansammeln, hier an- und einbrennen und schwer zu entfernen sind.

Etwas Abhilfe wird bei dem Grillgerät nach der US 2011/0049125 A1 geschaffen, indem das Rost in aneinanderfügbare und aus einer Aufnahme des Rahmengestells herausnehmbare Rostabschnitte unterteilt ist. Weitere Stand der Technik Dokumente sind bspw. WO 2007/073061, US 2003/041744, US 2001/037802, US 5 603 256, US 5 473 980.

Aufgabe der Erfindung ist es, ein Grillgerät mit einem rahmenartigen Gestell vorzuschlagen, dessen Teile verschmutzungshemmend angeordnet sind und leicht zu reinigen sind, vorzugsweise indem sie lösbar im Gestell angeordnet sind und in eine Spülmaschine einbringbar sind.

Gelöst wird diese Aufgabe durch ein Grillgerät mit den Merkmalen des Anspruches 1, vorteilhafte Ausgestaltungen sind Gegenstand der Unteransprüche.

Erfindungsgemäß wird bei einem Grillgerät, das ein Rahmengestell von vorzugsweise quaderförmiger Gestalt aufweist, indem Gas- und/oder elektrische Heizmittel unterhalb eines Rostes angeordnet sind, wobei das Rost auf einer Auflage des oberen Randbereiches des Rahmengestells angeordnet ist und in aneinanderfügbare und aus der Auflage des Rahmengestells herausnehmbare Rostabschnitte unterteilt ist, die Heizmittel über eine fettableitende Abdeckung verfügen, die am Rahmengestell abgestützt angeordnet sind und mit schrägen Leitblechen für abtropfendes Fett unterhalb der Heizmittel, über die das abtropfende Fett einer Sammelrinne zuleitbar ist, vorgeschlagen, dass
- die fettableitende Abdeckung aus flächigen Lamellen besteht, die jalousieartig aneinandergereiht und verstellbar oberhalb der Heizmittel angeordnet sind, wobei die einzelnen Lamellen lösbar im jalousieartigen Verbund angeordnet sind und
- die Leitbleche in sich überlappende, aus dem Rahmengestell entfernbare Leitblechabschnitte unterteilt sind.

Die Verwendung des Begriffes Fett schließt dabei Fleischsaft ebenso ein, wie auf das Grillgut aufgebrachte Saucen oder beim Grillen auf das Grillgut aufgebrachte Flüssigkeiten, die abtropfen.

Eine derartige Strukturierung der Baueinheiten des Grillgerätes schafft grundsätzlich die Voraussetzungen für eine Zugriffsfähigkeit der Teile, die Fettkontakt haben. Sie können zu Reinigungszwecken entnommen werden. Desweiteren ist ihre Größe so festlegbar, dass die Teile in herkömmliche Geschirrspülmaschinen einbringbar sind, somit maschinentechnisch gereinigt werden können.

Darüber hinaus sind weitere vorteilhafte Ausgestaltungen vorgesehen.

So wird vorgeschlagen, dass die Rostabschnitte im Auflagebereich auf dem Rahmengestell beidseitig Auflageschienen aufweisen, in denen sich parallel angeordnete Roststäbe drehbar abstützen. Derart drehbare Roststäbe lassen ein Bewegen des Grillgutes in der Rostebene zu, bei Grillgut mit einem kreisförmigen Querschnitt auch das Wenden bei einer Bewegung in der Rostebene.

Die zur Verschmutzung neigenden knotenartigen Kreuzungspunkte von Gitterrosten sind entfallen.

In einer weiteren Ausgestaltung ist vorgesehen, dass die Auflageschienen der Rostabschnitte in oder an den Endbereichen Verbindungsmittel aufweisen, mittels derer zwischen benachbarten auf dem Rahmengestell angeordneten Auflageschienen eine formschlüssige Verbindung herstellbar ist.

Als Alternative oder gleichzeitig kann auch vorgesehen sein, dass die Auflage des Rahmengestells, wo die Auflageschienen sich abstützen, Rastungen aufweist, die mit Rastmitteln der Auflageschienen korrespondieren, so dass die Rostabschnitte eine definierte Lage einnehmen.

In beiden Fällen wird ein stabiles und in der Rostebene durchgängiges Rost erzeugt. Die Rastungen sind bei herausgenommenen Rostabschnitten zu Reinigungszwecken gut zugängig. Verbindungsmittel an den Auflageschienen werden maschinentechnisch gereinigt, wenn der Rostabschnitt in die Geschirrspülmaschine kommt.

Darüber hinaus können die Verbindungselemente oder die Rastungen genutzt werden, um Rostabschnitte durch Platten oder Grillvorrichtungen für spezielle Zubereitungen auszutauschen, indem sich die Platten oder Grillvorrichtungen auf der Auflage des Rahmengestells abstützen und mit benachbarten Rostabschnitten durch die Verbindungsmittel verbindbar sind oder Rastmittel aufweisen, die mit den Rastungen der Auflage des Rahmengestells korrespondieren, so dass sie auf diese Weise festlegbar sind.

Die Heizmittel werden durch die darüber angeordneten, schräg anstellbaren Lamellen vor herabtropfendem Fett geschützt. In einer vorteilhaften Ausführung ist für das Verstellen der Lamellen eine Schwenkbewegung vorgesehen, die sich in einem Schwenkbereich bezogen auf eine waagerechte Ebene von mindestens α = 10 - 65° bewegt. Weiter ist vorgesehen, dass die Breiten (b) der Lamellen so bemessen sind, dass bei den Anstellwinkeln im Schwenkbereich α jeweils der obere Seitenbereich einer Lamelle zum unteren Seitenbereich der benachbarten Lamelle in der Draufsicht einen Abstand (x) aufweist.

So tritt kein Wärmestau an den Lamellen auf. Die Heißluft von den Heizmittel kann von unten an die Lamellen stoßend in einem optimalen Wärmestrom zum Grillgut gelangen. Abtropfendes Fett fällt von oben auf die Lamellen und wird zuverlässig abgeleitet.

Durch die Veränderung des Anstellwinkels der Lamellen kann auf den Wärmestrom Einfluss genommen werden, ohne dass das Ableiten des abtropfenden Fettes davon nachhaltig beeinflusst wird.

Als Heizmittel werden bevorzugt langgestreckte Brenner oder Heizstangen eingesetzt, die gleichgerichtet zu den Roststäben angeordnet sind. Vorzugsweise sind für einen Rostabschnitt ein oder zwei Brenner/Heizstäbe vorgesehen, wobei über jedem Brenner/Heizstab eine Lamelle angeordnet ist.

Dabei sollten die Heizmittel getrennt aktivierbar und/oder in der Heizleistung einstellbar sein.

In weiterer Ausgestaltung des Grillgerätes ist vorgesehen, dass der obere Randbereich des Rahmengestells senkrechte Einstecköffnungen aufweist, die untereinander eine Rastermaß (z) aufweisen, so dass Grillaufsätze mit Zapfen, die im Abstand das gleiche Rastermaß aufweisen, formschlüssig in die Einstecköffnungen einsteckbar sind.

Grillaufsätze sind z.B. Warmhalteplatten oder Ablagen. Diese können zum Reinigen aus den Einstecköffnungen herausgenommen werden. Durch eine entsprechend Auswahl der Rastermaße und damit der Größe der Grillaufsätze lassen sich diese auch geschirrspülmaschinentauglich ausführen.

Schließlich ist bei einer bevorzugten Ausführung am Rahmengestell eine Abdeckhaube für den Grillbereich angeordnet, die mittels Scharnieren aufklappbar ist, wobei die Scharniere rückwandig am Rahmengestell nach unten/oben verschiebbar sind. Die Abdeckhaube kann so aus dem Grillbereich entfernt werden, steht aber griffbereit zum Abdecken zur Verfügung.

Die Erfindung soll anhand der Zeichnungen erläutert werden. Es zeigen:
- Fig. 1: ein Modell eines Grills,
- Fig. 2: die innere Strukturierung der Baueinheiten des Grills,
- Fig. 3: die Anstellung der Lamellen und
- Fig. 4: den Wärmestrom und den Fettablauf.

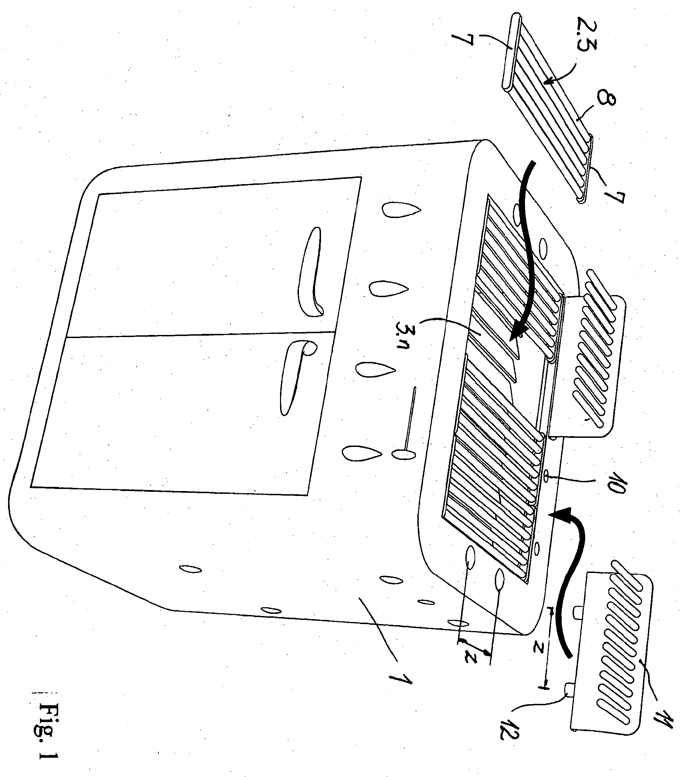

**Fig.1** zeigt einen Grill mit quaderförmigem Rahmengestell 1, das an den Seitenbereichen verkleidet ist. Der Grillbereich ist durch eine Abdeckhaube abdeckbar.

Die Abdeckhaube ist mittels Scharnieren, die einmal das Aufklappen ermöglichen und die rückwandig am Rahmengestell 1 nach unten/oben verschiebbar sind, am Rahmengestell befestigt.

Der Rost 2 ist im oberen Randbereich des Rahmengestells 1 in einer Auflage 1.1 des Rahmengestells 1 angeordnet. Der Rost 2 setzt sich aus Rostabschnitten 2.1 - 2.n zusammen, wobei jeder Rostabschnitt 2.1 2.n separat aus der Auflage 1.1 herausnehmbar ist. Die Abmaße der Rostabschnitte 2.1 - 2.n sind dabei so gewählt, dass die Rostabschnitte 2.1 - 2.n in eine herkömmliche Geschirrspülmaschine zur Reinigung einbringbar sind.

Jeder Rostabschnitt 2.1 - 2.n weist im Auflagebereich auf dem Rahmengestell 1 beidseitig Auflageschienen 7 auf, in denen sich parallel angeordnete Roststäbe 8 drehbar abstützen.

Rostabschnitte 2.i können auch gegen Platten oder Grillvorrichtungen für spezielle Zubereitungen ausgetauscht werden, wobei die Platten oder Grillvorrichtungen sich auf der Auflage 1.1 des Rahmengestells 1 abstützen.

Ferner wird gezeigt, dass im oberen Randbereich des Rahmengestells 1 senkrechte Einstecköffnungen 10 angeordnet sind, die untereinander eine Rastermaß (z) aufweisen, so dass Grillaufsätze 11 mit Zapfen 12, die im Abstand das gleiche Rastermaß aufweisen, förmschlüssig in die Einstecköffnungen 10 einsteckbar sind. Als Grillaufsätze 11 sind hier Warmhalteroste abgebildet.

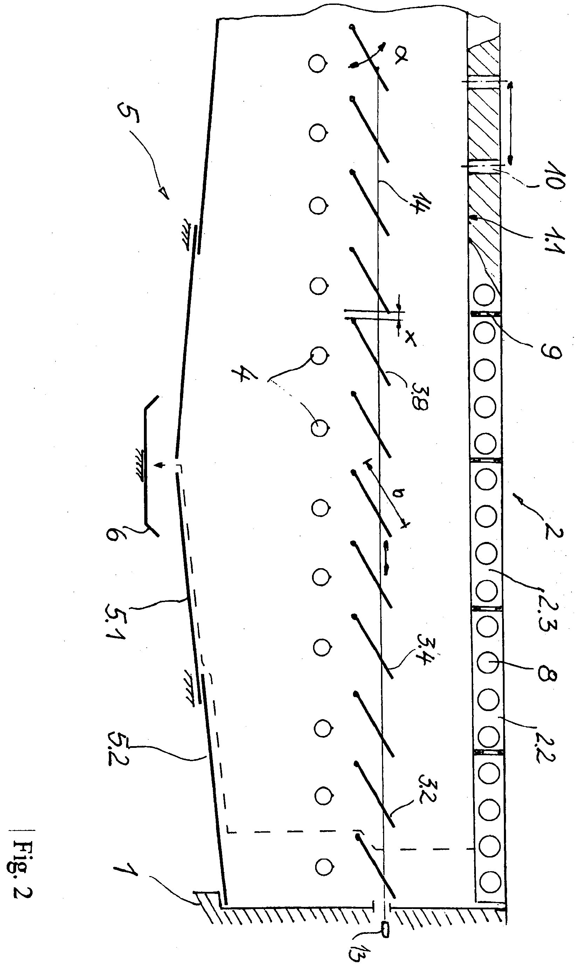

**Fig. 2** zeigt die innere Strukturierung der Baueinheiten des Grillgerätes.

Das Grillgerät weist ein Rahmengestell 1 von quaderförmiger Gestalt auf, in dem Gas- und/oder elektrische Heizmittel 4 unterhalb eines Rostes 2 angeordnet sind.

Der Rost 2 liegt auf einer Auflage 1.1 des oberen Randbereiches des Rahmengestells 1 auf und ist in aneinanderfügbare und aus der Auflage 1.1 des Rahmengestells 1 herausnehmbare Rostabschnitte 2.1 - 2.n unterteilt.

Die Rostabschnitte 2.1 - 2.n weisen im Auflagebereich auf dem Rahmengestell 1 beidseitig Auflageschienen 7 auf, in denen sich die parallel angeordneten Roststäbe 8 drehbar abstützen.

Die Auflage 1.1 des Rahmengestells 1, wo die Auflageschienen 7 sich abstützen, verfügt über Rastungen 9, die mit Rastmitteln der Auflageschienen 7 korrespondieren, so dass die Rostabschnitte 2.1 - 2.n eine definierte Lage einnehmen.

Rostabschnitte 2.1 - 2.n sind durch Platten oder Grillvorrichtungen für spezielle Zubereitungen austauschbar, wobei die Platten oder Grillvorrichtungen sich auf der Auflage 1.1 des Rahmengestell 1 abstützen und mit benachbarten Rostabschnitten 2.i durch Verbindungsmittel verbindbar sind oder Rastmittel aufweisen, die mit den Rastungen 9 der Auflage 1.1 des Rahmengestells 1 korrespondieren. So lassen sich auch diese im Verbund mit Rostabschnitten 2.i zu einer Grilloberfläche vereinen.

Die Heizmittel 4 verfügen über eine fettableitende Abdeckung in Form von Lamellen 3.1 - 3.m, die am Rahmengestell 1 abgestützt angeordnet sind.
Die Heizmittel 4 bestehen aus langgestreckten Brennern oder Heizstangen, wobei für zwei Brenner/Heizstäbe ein Rostabschnitt 2.1 - 2.n vorgesehen ist.

Die fettableitende Abdeckung 3 besteht aus flächigen Lamellen 3.1 - 3.m, die jalousieartig aneinandergereiht und verstellbar oberhalb der Heizmittel 4 angeordnet sind, wobei die einzelnen Lamellen 3.1 - 3.m lösbar im jalousieartigen Verbund angeordnet sind. Das Verstellen der Lamellen 3.1 - 3.m kann mittels der angedeuteten Schubstange 14 über einen seitlichen Griff 13 am Rahmengehäuse 1 vorgenommen werden.

Für das Verstellen der Lamellen 3.1 - 3.m ist eine Schwenkbewegung der Lamellen 3.1 - 3.m bezogen auf eine waagerechte Ebene von mindestens α = 10 - 65° vorgesehen.

Die Breiten (b) der Lamellen 3.1 - 3.m sind so bemessen, dass bei den Anstellwinkeln im Schwenkbereich α jeweils der obere Seitenbereich einer Lamelle - hier am Beispiel der Lamellen 3.9 und 3.8 dargestellt - zum unteren Seitenbereich der benachbarten Lamelle in der Draufsicht einen Abstand (x) aufweist.

Geneigt angeordnete Leitbleche 5 für abtropfendes Fett befinden sich unterhalb der Heizmittel 4, über die das abtropfende Fett einer Sammelrinne 6 zuleitbar ist. Die Leitbleche 5 sind in sich überlappende, aus dem Rahmengestell 1 entfernbare Leitblechabschnitte 5.1, 5.2 unterteilt.

Weiter wird gezeigt, dass der obere Randbereich des Rahmengestells 1 senkrechte Einstecköffnungen 10 aufweist, die untereinander eine Rastermaß (z) aufweisen, so dass Grillaufsätze mit Zapfen 12, die im Abstand das gleiche Rastermaß aufweisen, formschlüssig in die Einstecköffnungen 10 einsteckbar sind.

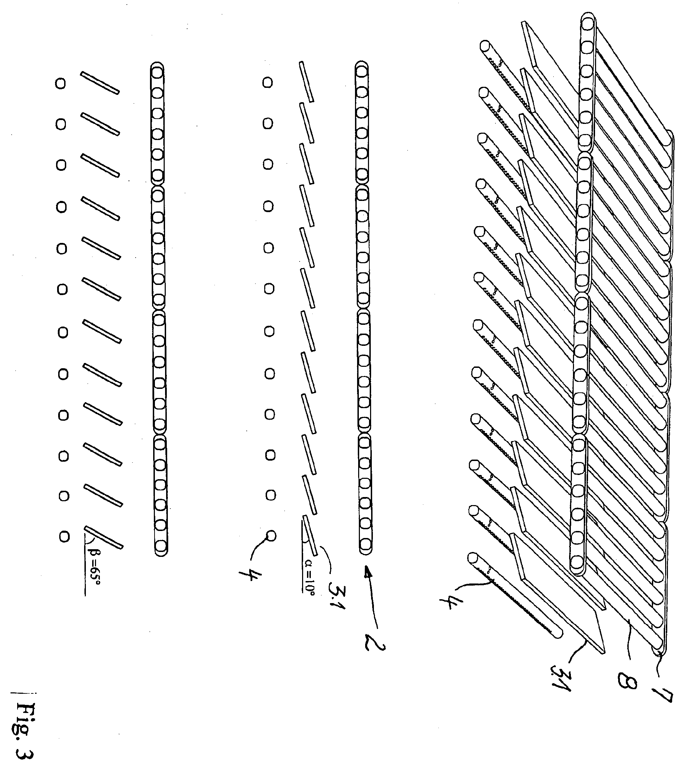

**Fig. 3** zeigt das Verstellen der jalousieartig angeordneten Lamellen 3.1 - 3.m über den Heizmitteln 4. Der Anstellwinkel α der Lamellen gegenüber der Waagerechten liegt zwischen 10 - 65°.

Diese Winkelspanne sichert, dass abtropfendes, auf die Lamellen 3.1 - 3.m auftreffendes Fett abgeleitet wird. Gleichzeitig kann durch diese Winkelspanne der Wärmestrom stark abgeschwächt oder auch intensiviert werden.

**Fig. 4** macht nochmals deutlich, dass im Gegensatz zum Stand der Technik, der in Fig. 4 a gezeigt wird, dass bei den erfindungsgemäßen Anordnungen nach Fig. 4b und 4c kein Kontakt zwischen Wärmestrom und dem Ablaufstrom von abtropfendem Fett einerseits und dem abtropfenden Fett und den Heizmitteln 4 andererseits besteht. Dazu ist über jedem Heizmittel 4 eine schräggestellte Lamelle 4 angeordnet (Fig. 4 b) oder auch ein Blechwinkel (15) mit nach oben weisender Öffnung (Fig. 4 c).

Bei der Ausführung nach Fig. 4c übernimmt der Blechwinkel (15) gleichzeitig eine Fettsammel- und Ableitfunktion für ein Teil des Fettes. Das bedeutet, dass der Winkel (15) bezogen auf seine Länge einen leichten Neigungswinkel hin zu einer Fettablaufrinne aufweisen muss.

Die Schrägstellung der Lamellen 3.1 - 3.m und auch die der beiden Schenkel des Blechwinkels (15) gewährleisten einen optimalen Wärmestrom ohne Stau oder Verwirbelungen, wie sie in Fig. 4 a dargestellt sind.

Mit dem vorliegenden Grillgerät werden Funktionalität und Handelbarkeit in optimaler Weise vereint. Das Grillgerät trennt konsequent den Wärme- und den Ablaufstrom von Fett, so dass es nicht zu Verbrennungen von fetthaltigen Substanzen und damit zu schädigenden Gasen und/oder lästigen Gerüchen kommt. Die von den Heizmitteln bereitgestellte Wärme wird verlustarm zum Grillen genutzt. Das Grillgerät ist durch Zusatzgeräte ergänzbar, wobei diese auf einfache Weise mit dem Grillgerät verbindbar sind.

Nach dem Grillen bleibt kein verschmutztes Gerät zurück, das in mühevolle Handarbeit zu reinigen ist, sondern mit ein paar Handgriffen sind die fettbelasteten Teile im Haushaltsgeschirrspüler verstaut und werden sicher maschinell gereinigt.

### Bezugszeichenliste

- 1: Rahmengestell
- 1.n: Auflage im oberen Randbereich des Rahmengestells
- 2: Rost
- 2.1: Rostabschnitte
- 2.2: Rostabschnitte
- 2.n: Rostabschnitte
- 3: fettableitende Abdeckung
- 3.1: Lamellen
- 3.2: Lamellen
- 3.m: Lamellen
- 4: Heizmittel
- 5: Leitbleche
- 5.1: Leitabschnitte
- 5.2: Leitabschnitte
- 6: Sammelrinne für Fett
- 7: Auflageschiene
- 8: Roststäbe
- 9: Rastung
- 10: Einstecköffnung
- 11: Grillaufsatz
- 12: Zapfen
- 13: Griff der Schubstange
- 14: Schubstange
- 15: Blechwinkel als fettableitende Abdeckung

## Patentansprüche

1. Grillgerät, das ein Rahmengestell von quaderförmiger Gestalt aufweist, in dem Gas- und/oder elektrische Heizmittel unterhalb eines Rostes angeordnet sind, wobei der Rost auf einer Auflage des oberen Randbereiches des Rahmengestells angeordnet ist, und in aneinanderfügbare und aus der Auflage des Rahmengestells herausnehmbare Rostabschnitte unterteilt ist, die Heizmittel über eine fettableitende Abdeckung verfügen, die am Rahmengestell abgestützt angeordnet sind und mit schrägen Leitblechen für abtropfendes Fett unterhalb der Heizmittel, über die das abtropfende Fett einer Sammelrinne zuleitbar ist, **dadurch gekennzeichnet, dass**
- die fettableitende Abdeckung (3) aus flächigen Lamellen (3.1 - 3.m) besteht, die jalousieartig aneinandergereiht und verstellbar oberhalb der Heizmittel (4) angeordnet sind, wobei die einzelnen Lamellen (3.1 - 3.m) lösbar im jalousieartigen Verbund angeordnet sind und
- die Leitbleche (5) in sich überlappende, aus dem Rahmengestell (1) entfernbare Leitblechabschnitte (5.1, 5.2) unterteilt sind.

2. Grillgerät nach Anspruch 1, **dadurch gekennzeichnet, dass**
die Rostabschnitte (2.1 - 2.n) im Auflagebereich auf dem Rahmengestell (1) beidseitig Auflageschienen (7) aufweisen, in denen sich parallel angeordnete Roststäbe (8) drehbar abstützen.

3. Grillgerät nach Anspruch 2, **dadurch gekennzeichnet, dass**
die Auflageschienen (7) der Rostabschnitte (2.1 - 2.n) in den Endbereichen Verbindungsmittel aufweisen, mittels derer zwischen benachbarten auf dem Rahmengestell (1) angeordneten Auflageschienen (7) eine formschlüssige Verbindung herstellbar ist.

4. Grillgerät nach einem der Ansprüche 1 bis 3, **dadurch gekennzeichnet, dass**
die Auflage (1.1) des Rahmengestells (1), wo die Auflageschienen (7) sich abstützen, Rastungen (9) aufweist, die mit Rastmitteln der Auflageschienen (7) korrespondieren, so dass Rostabschnitte (2.1 - 2.n) eine definierte Lage einnehmen.

5. Grillgerät nach einem der Ansprüche 1 bis 4, **dadurch gekennzeichnet, dass**
Rostabschnitte (2.1 - 2.n) durch Platten oder Grillvorrichtungen für spezielle Zubereitungen austauschbar sind, wobei die Platten oder Grillvorrichtungen sich auf der Auflage (1.1) des Rahmengestell (1) abstützen und mit benachbarten Rostabschnitten (2.i) durch die Verbindungsmittel verbindbar sind oder Rastmittel aufweisen, die mit den Rastungen (9) der Auflage (1.1) des Rahmengestells (1) korrespondieren.

6. Grillgerät nach einem der Ansprüche 1 bis 5, **dadurch gekennzeichnet, dass**
das Verstellen der Lamellen (3.1 - 3.m) eine Schwenkbewegung der Lamellen (3.1 - 3.m) ist und die Schwenkbewegung in einem Schwenkbereich bezogen auf eine waagerechte Ebene von mindestens α = 10 - 65° realisierbar ist.

7. Grillgerät nach einem der Ansprüche 1 bis 6, **dadurch gekennzeichnet, dass**
die Breiten (b) der Lamellen (3.1 - 3.m) so bemessen sind, dass bei den Anstellwinkeln im Schwenkbereich α jeweils der obere Seitenbereich einer Lamelle (3.2) zum unteren Seitenbereich der benachbarten Lamelle (3.1) in der Draufsicht einen Abstand (x) aufweist.

8. Grillgerät nach einem der Ansprüche 1 bis 7, **dadurch gekennzeichnet, dass**
die Heizmittel (4) aus langgestreckten Brennern oder Heizstangen bestehen und für einen oder zwei Brenner/Heizstäbe ein Rostabschnitt (2.1 - 2.n) vorgesehen ist.

9. Grillgerät nach einem der Ansprüche 1 bis 8, **dadurch gekennzeichnet, dass**
die Heizmittel (4) getrennt aktivierbar und/oder in der Heizleistung einstellbar sind.

10. Grillgerät nach einem der Ansprüche 1 bis 9, **dadurch gekennzeichnet, dass**
der obere Randbereich des Rahmengestells (1) senkrechte Einstecköffnungen (10) aufweist, die untereinander eine Rastermaß (z) aufweisen, so dass Grillaufsätze mit Zapfen (12), die im Abstand das gleiche Rastermaß aufweisen, formschlüssig in die Einstecköffnungen (10) einsteckbar sind.

11. Grillgerät nach einem der Ansprüche 1 bis 10, **dadurch gekennzeichnet, dass**
am Rahmengestell (1) eine Abdeckhaube (13) für den Grillbereich angeordnet ist, die mittels Scharnieren aufklappbar ist, wobei die Scharniere rückwandig am Rahmengestell (1) nach unten/oben verschiebbar sind.

12. Grillgerät nach einem der Ansprüche 1 bis 11, **dadurch gekennzeichnet, dass**
anstelle von lamellenförmigen Abdeckungen Blechwinkel (15) mit zum Rost (2) weisender Öffnung über den Heizmitteln (4) angeordnet sind und sich darin sammelndes Fett durch eine Neigung in Blechwinkellängsrichtung ableitbar ist.

## Claims

1. A grill device which has a frame with a cuboid-shaped design, in which gas and/or electrical heating means are arranged below a grate, wherein the grate is arranged on a support of the upper edge region of the frame and is divided into grate sections which can be joined together and can be removed from the support of the frame, wherein the heating means have a grease-deflecting cover which is arranged so that it is supported on the frame and has oblique guide plates for dripping grease below the heating means, via which the dripping grease can be directed towards a collecting channel,
**characterized in that**
- the grease-deflecting cover (3) comprises flat fins (3.1 - 3.m) which are arranged in sequence like blinds and are adjustably arranged above the heating means (4), wherein the individual fins (3.1 - 3.m) are arranged so as to be detachable in the blind-like combination and
- the guide plates (5) are divided into overlapping guide plate sections (5.1, 5.2) which can be removed from the frame (1).

2. The grill device according to Claim 1, **characterized in that**
within the support region on the frame (1) the grate sections (2.1 - 2.n) are provided on both sides with support rails (7) in which grate bars (8) arranged in parallel are supported so as to be able to rotate.

3. The grill device according to Claim 2, **characterized in that**
the support rails (7) of the grate sections (2.1 - 2.n) have connecting means in the end regions, via which connecting means a positive connection can be achieved between adjacent support rails (7) arranged on the frame (1).

4. The grill device according to any one of Claims 1 to 3, **characterized in that**
the support (1.1) of the frame (1), at the point where the support rails (7) are supported, has latches (9) corresponding to latching means of the support rails (7) such that the grate sections (2.1 - 2.n) assume a defined position.

5. The grill device according to any one of Claims 1 to 4, **characterized in that**
grate sections (2.1 - 2.n) can be replaced by plates or grill devices for special preparations, wherein the plates or grill devices are supported on the support (1.1) of the frame (1) and can be connected to adjacent grate sections (2.i) by connecting means or have latching means which correspond to the latches (9) of the support (1.1) of the frame (1).

6. The grill device according to any one of Claims 1 to 5, **characterized in that**
adjusting the fins (3.1 - 3.m) is a pivot movement of the fins (3.1 - 3.m) and the pivot movement can be realized within a pivotal range of at least α = 10 - 65° with reference to a horizontal plane.

7. The grill device according to any one of Claims 1 to 6, **characterized in that**
the widths (b) of the fins (3.1 - 3.m) are dimensioned such that with the pitch angles within the pivotal range α the respective upper lateral area of a fin (3.2) is spaced at a distance (x) from the lower lateral area of the adjacent fin (3.1) in a top view.

8. The grill device according to any one of Claims 1 to 7, **characterized in that**
the heating means (4) comprise elongated burners or heating rods and one grate section (2.1 - 2.n) is provided for one or two burners/heating rods.

9. The grill device according to any one of Claims 1 to 8, **characterized in that**
the heating means (4) can be activated and/or adjusted as to their heating power separately from one another.

10. The grill device according to any one of Claims 1 to 9, **characterized in that**
the upper edge region of the frame (1) has vertical insertion openings (10), which, between one another, have a grid dimension (z), such that grill add-on elements having spigots (12) spaced apart with the same grid dimension can be inserted into the insertion openings (10) so as to form a positive connection.

11. The grill device according to any one of Claims 1 to 10, **characterized in that**
a cover hood (13) for the grill zone is arranged on the frame (1), which cover hood can be opened via hinges, wherein the hinges can be displaced downwardly/upwardly on the back wall of the frame (1).

12. The grill device according to any one of Claims 1 to 11, **characterized in that**
instead of fin-shaped covers sheet metal angles (15) with their opening facing the grate (2) are arranged above the heating means (4) and grease accumulating therein can be deflected by a slope in the longitudinal direction of the sheet metal angle.

## Revendications

1. Gril, qui présente un châssis cadre de constitution parallélépipédique, dans lequel des moyens de chauffage au gaz et/ou électriques sont disposés sous une grille, la grille étant disposée sur un support de la zone marginale supérieure du châssis cadre, et étant divisée en tronçons de grille pouvant être accolés et pouvant être enlevés du support du châssis cadre, les moyens de chauffage disposant d'une couverture détournant la graisse, qui sont disposés en appui sur le châssis cadre, et avec des tôles de guidage obliques pour la graisse qui s'égoutte sous les moyens de chauffage, par le biais desquelles la graisse qui s'égoutte peut être conduite à une rigole collectrice, **caractérisé en ce que**
- la couverture détournant la graisse (3) se compose de lamelles (3.1 - 3.m) plates qui sont disposées au-dessus des moyens de chauffage de façon juxtaposée à la façon d'un store vénitien et de façon réglable, les différentes lamelles (3.1 - 3.m) étant disposées de façon détachable dans l'assemblage à la façon d'un store vénitien et
- les tôles de guidage (5) sont divisées en tronçons de tôles de guidage (5.1, 5.2) qui se chevauchent et peuvent être enlevés du châssis cadre (1).

2. Grill selon la revendication 1, **caractérisé en ce que**
les tronçons de grille (2.1 - 2.n) présentent, dans la zone d'appui sur le châssis cadre (1), sur les deux côtés, des rails d'appui (7) dans lesquels des barreaux de grille (8) disposés parallèlement s'appuient de façon rotative.

3. Grill selon la revendication 2, **caractérisé en ce que**
les rails d'appui (7) des tronçons de grille (2.1 - 2.n) présentent, dans les zones d'extrémité, des moyens de raccordement au moyen desquels un raccordement par liaison de forme peut être réalisé entre des rails d'appui (7) voisins disposés sur le châssis cadre (1).

4. Grill selon l'une des revendications 1 à 3, **caractérisé en ce que**
le support (1.1) du châssis cadre (1), là où les rails d'appui (7) s'appuient, présentent des crans (9) qui correspondent à des moyens d'encliquetage des rails d'appui (7) de telle sorte que des tronçons de grille (2.1 - 2.n) adoptent une position définie.

5. Grill selon l'une des revendications 1 à 4, **caractérisé en ce que**
des tronçons de grille (2.1 - 2.n) peuvent être remplacés par des plaques ou des dispositifs de grille pour des préparations spéciales, les plaques ou dispositifs de grille s'appuyant sur le support (1.1) du châssis cadre (1) et pouvant être raccordé(e)s à des tronçons de grille (2.i) voisins par les moyens de raccordement ou présentant des moyens d'encliquetage qui correspondent aux crans (9) du support (1.1) du châssis cadre (1).

6. Grill selon l'une des revendications 1 à 5, **caractérisé en ce que**
le déplacement des lamelles (3.1 - 3.m) est un mouvement pivotant des lamelles (3.1 - 3.m) et **en ce que** le mouvement de pivotement est réalisable dans une plage de pivotement d'au moins α = 10 - 65° rapportée à un plan horizontal.

7. Grill selon l'une des revendications 1 à 6, **caractérisé en ce que**
les largeurs (b) des lamelles (3.1 - 3.m) sont dimensionnées de telle sorte que, pour les angles d'incidence dans la plage de pivotement α, la zone latérale supérieure d'une lamelle (3.2) présente respectivement, en vue de dessus, une distance (x) à la zone latérale inférieure de la lamelle voisine (3.1).

8. Grill selon l'une des revendications 1 à 7, **caractérisé en ce que**
les moyens de chauffage (4) se composent de brûleurs ou tiges chauffantes allongé(e)s et **en ce qu'**un tronçon de grille (2.1 - 2.n) est prévu pour un ou deux brûleurs/tiges chauffantes.

9. Grill selon l'une des revendications 1 à 8, **caractérisé en ce que**
les moyens de chauffage (4) peuvent être activés séparément et/ou leur puissance de chauffage peut être réglée séparément.

10. Grill selon l'une des revendications 1 à 9, **caractérisé en ce que**
la zone marginale supérieure du châssis cadre (1) présente des ouvertures d'insertion (10) verticales qui présentent entre elles une dimension de trame (z) de telle sorte que des chapeaux de grille avec des tenons (12) qui présentent la même dimension de trame en matière d'espacement peuvent être insérés dans les ouvertures d'insertion (10).

11. Grill selon l'une des revendications 1 à 10, **caractérisé en ce que**,
sur le châssis cadre (1), il est disposé pour la zone de grill un capot de couverture (13) qui peut être relevé au moyen de charnières, les charnières pouvant être déplacées vers le bas / le haut sur la paroi arrière sur le châssis cadre (1).

12. Grill selon l'une des revendications 1 à 11, **caractérisé en ce que**,
à la place de couvertures en forme de lamelles, des cornières métalliques (15) avec une ouverture dirigée vers la grille (2) sont disposées au-dessus des moyens de chauffage (4), et **en ce que** la graisse qui s'y accumule peut être détournée par une inclinaison dans la direction longitudinale de cornières.
